# EUROPÄISCHE PATENTSCHRIFT

(11) **EP 3 361 164 B1**
(45) Veröffentlichungstag und Bekanntmachung des Hinweises auf die Patenterteilung: **17.07.2019**
(21) Anmeldenummer: 18152334.1
(22) Anmeldetag: 18.01.2018
(51) Int. Cl.: F24D 3/14, F24D 5/10, F28F 3/04, F28F 21/06, F24F 5/00

(54) **BODENPANEL, INSBESONDERE ZUM AUFBAU EINES TEMPERIERBAREN HOHLRAUMBODENS**
FLOOR PANEL, IN PARTICULAR FOR PRODUCING A TEMPERATURE CONTROLLABLE CAVITY FLOOR
PANNEAU DE PLANCHER, EN PARTICULIER DESTINÉ À LA CONSTRUCTION D'UN PLANCHER AU SOL VENTILÉ POUVANT ÊTRE TEMPÉRÉ

(30) Priorität: 13.02.2017 DE 202017100755 U
(43) Veröffentlichungstag der Anmeldung: 15.08.2018
(73) Patentinhaber: Uponor Innovation AB, 73061 Virsbo (SE)
(72) Erfinder: Steiner, Markus, 53567 Asbach (DE); Lipinski, Johann, 22926 Ahrensburg (DE)
(74) Vertreter: Epping - Hermann - Fischer

(56) Entgegenhaltungen:
- EP-A1- 0 065 679
- DE-A1-102010 025 808
- DE-B- 1 074 247
- US-A- 2 956 785

## Beschreibung

Die Erfindung betrifft ein Bodenpanel, insbesondere zum Aufbau eines temperierbaren Hohlraumbodens. Derartige Bodenpanele eignen sich insbesondere zum Aufbau eines Fußbodenheiz- beziehungsweise -kühlsystems mit einem daran thermisch gekoppelten Belüftungssystem.

Aus der deutschen Patentschrift DE 38 37 562 C2 ist ein Flächenelement für einen beheizbaren Hohlraumboden bekannt. Bei dem bekannten Flächenelement liegt auf einem Unterboden eine Distanzplatte mit über deren Fläche verteilt angeordneten Distanzelementen, wobei zwischen einem Oberboden und der Distanzplatte Heizelemente einer Flächenheizung angeordnet sind. Das bekannte Flächenheizelement ist dadurch gekennzeichnet, dass die Distanzplatte aus einer Kunststofffolie mit die Distanzelemente bildende tiefgezogenen Höckern besteht, die durch keramische Stützkörper verstärkt sind, und dass die Kunststofffolie auf ihrer den Höckern abgewandten Flachseite mit einer Trägerplatte für die Heizelemente verbunden ist.

Die DE 10 2010 025 808 A1 zeigt ein Bodenpanel gemäß dem Oberbegriff des Anspruchs 1 und eine Anordnung zur Temperierung und Lüftung von Gebäuderäumen mit einem Unterboden, einer auf dem Unterboden angeordneten Wärmedämmschicht, einer darauf angeordneten Anzahl von fluiddurchströmbaren Heizungs-/Kühlungsrohren, sowie einer diese überdeckenden und teilweise umhüllenden Estrichschicht, wobei auf die Wärmedämmschicht mindestens in Teilzonen mindestens ein Wärmetauscher aus wärmeleitendem Material aufgebracht ist, der oberseitig Teilbereiche der Heizungs-/Kühlungsrohre trägt, der mit der Estrichschicht in wärmeleitender Berührung ist, der unterseitig Kanäle aufweist, die an zwei einander gegenüberliegenden Endbereichen des Wärmetauschers zu je einem gemeinsamen Anschlussteil mit Anschlussstutzen zusammengeführt sind, wobei ein erster Anschlussstutzen mit Zuluft einer Lüftungsanlage gespeist ist und der zweite Anschlussstutzen in den zu klimatisierenden Raum ausmündet.

Die EP 0 065 679 A1 betrifft einen flächenhaften Körper mit einem für strömungsfähige Medien durchströmbarem Hohlraum, der einen Zulauf für strömungsfähige Medien in den Hohlraum und einen Ablauf für diese aus ihm besitzt, wobei er aus zwei Folienzuschnitten besteht, die seine nur im Bereich ihrer übereinanderliegenden Ränder fest miteinander verbundenen Wandungen bilden und gemeinsam einen Hohlraum einschließen und wenigstens eine Wandung eine große Anzahl in den Hohlraum ragender Vorsprünge besitzt, wobei die Vorsprünge Teilhohlräume begrenzen, die jeweils miteinander in Verbindung stehen und in ihrer Gesamtheit ein für strömungsfähige Medien durchströmbares Kontinuum bilden.

Die DE 1 074 247 B betrifft Decken-, Wand- oder Bodenheizungsanlagen mit aus einem zugfesten und feuchtigkeitsundurchlässigem Kunststoff bestehenden Kanälen rechteckigen oder ähnlichen Querschnitts, dessen längere Seitenflächen parallel zu einer zu beheizenden Raumfläche verlaufen.

Die US 2,959,785 betrifft eine Heizpanel-Konstruktion mit einer sich in einer ersten Ebene erstreckenden ersten Platte, einer davon beabstandeten zweiten Platte und einer Anzahl von sich zwischen der ersten und zweiten Platte erstreckenden Säulen.

Derartige beheizte Hohlraumböden eignen sich insbesondere zum Aufwärmen bzw. Nachheizen von Frischluft eines Belüftungssystems über eine in einem Raumboden verlegte Fußbodenheizung. Problematisch an den bekannten Flächenelementen ist, dass der in dem Hohlraumboden angeordnete Hohlraum zum Durchleiten von Frischluft nur schwer oder gar nicht zu reinigen ist. Dies kann zu einer hygienischen Beeinträchtigung der zugeführten Frischluft führen.

Es ist eine Aufgabe der vorliegenden Erfindung, ein verbessertes Bodenpanel, insbesondere zum Aufbau eines temperierbaren Hohlraumbodens, zu beschreiben, das ein Raumklima eines damit temperierten und belüfteten Raums verbessert. Bevorzugt soll sich ein zur Führung eines Luftstroms verwendeter Hohlraum des Bodenpanels besonders einfach reinigen lassen.

Gemäß einem ersten Aspekt der vorliegenden Erfindung wird das oben genannte Problem durch ein Bodenpanel, insbesondere zum Aufbau eines temperierbaren Hohlraumbodens, gelöst. Das Bodenpanel weist einen Grundkörper zum Übertragen einer Last von einem über dem Bodenpanel angeordneten Oberboden auf einen unter dem Bodenpanel angeordneten Unterboden, einen in dem Bodenpanel angeordneten ersten Hohlraum, einen Eingangsschacht, über den ein Luftstrom in den ersten Hohlraum einleitbar ist, und einen Ausgangsschacht, über den der Luftstrom aus dem ersten Hohlraum ausleitbar ist, auf. Das Bodenpanel weist des Weiteren ein in dem ersten Hohlraum angeordnetes Leitelement auf, das den Hohlraum in einen ersten Teilbereich und einen zweiten Teilbereich teilt. Der Eingangsschacht und der Ausgangsschacht sind auf einander gegenüberliegenden Seiten des Bodenpanels angeordnet, und das Leitelement weist ein, bezogen auf eine gerade Verbindungslinie zwischen dem Eingangsschacht und dem Ausgangsschacht, krummwinklig angeordnetes erstes Ableitelement im Bereich des Eingangsschachts und ein zu dem ersten Ableitelement im Wesentlichen paralleles, im Bereich des Ausgangsschachts angeordnetes zweites Ableitelement auf, so dass das Leitelement einen in den Eingangsschacht eingeführten Reinigungsschlauch in den ersten Teilbereich des Hohlraums ablenkt und einen in den Ausgangsschacht eingeführten Reinigungsschlauch in den zweiten Teilbereich des Hohlraums ablenkt.

Ein derartiges Bodenpanel ist verhältnismäßig einfach durch Einführen eines Reinigungsschlauchs in einen Eingangsschacht und einen Ausgangsschacht zu reinigen. Dabei dient das Leitelement gleichzeitig zu einer Kraftübertragung von einem Oberboden auf den Unterboden, einer Gliederung des Hohlraums in einen ersten und in einen zweiten Teilbereich sowie zu einer kontrollierten Ablenkung von einem in den Eingangsschacht beziehungsweise den Ausgangsschacht eingeführten Reinigungsschlauch.

Durch eine derartige, im Wesentlichen punktsymmetrische Ausgestaltung des Bodenpanels kann eine einfache Gliederung und Reinigung des Bodenpanels sichergestellt werden. Bei gleicher Ausgestaltung des Eingangs- und des Ausgangsschachts kann das Bodenpanel in einer beliebigen Richtung verlegt werden. Die Festlegung der Belüftungsrichtung erfolgt dann erst durch den Anschluss entsprechender Luftführungselemente.

In wenigstens einer Ausgestaltung ist das Leitelement im Querschnitt im Wesentlichen S-förmig ausgestaltet. Eine derartige Ausgestaltung ermöglicht gleichzeitig eine hohe Kraftübertragung und eine leicht zu reinigende Ausgestaltung des Hohlraums.

In wenigstens einer Ausgestaltung ist in dem Hohlraum des Weiteren eine Mehrzahl von Verstärkungselementen zur weiteren Verstärkung des Bodenpanels angeordnet. In wenigstens einer Ausgestaltung weisen die Verstärkungselemente eine Luftleitfunktion auf.

In wenigstens einer Ausgestaltung ist der Grundkörper als einstückiges Kunststoffformteil ausgestaltet. Insbesondere kann der Grundkörper aus expandiertem Polypropylen (EPP) hergestellt werden. Dies erlaubt eine einfache Herstellung eines leichten und stabilen Grundkörpers.

In wenigstens einer alternativen Ausgestaltung weist der Grundkörper eine den ersten Hohlraum zumindest teilweise begrenzende Wanne aus einem lebensmittelechten, ersten Kunststoffmaterial, insbesondere aus Polypropylen (PP), und eine die Wanne zumindest teilweise umgebende Füllung aus einem zweiten Kunststoffmaterial, insbesondere Polystyrol (PS) oder Polyurethan (PU), auf. Eine derartige Gestaltung erlaubt den Aufbau eines besonders leichten und stabilen Grundkörpers, wobei die den Hohlraum durchströmende Luft lediglich mit dem lebensmittelechten Kunststoffmaterial in Kontakt kommt.

In wenigstens einer Ausgestaltung weist das Bodenpanel eine unter dem Grundkörper angeordnete Trittschalldämmung aus einem dritten Kunststoffmaterial, insbesondere Polyethylen (PE), auf. Durch Vorsehung einer Trittschaldämmung in dem Bereich des Bodenpanels kann eine flächige Trittschalldämmung für den gesamten Boden eines Raumes sichergestellt werden.

In wenigstens einer Ausgestaltung weist das Bodenpanel ein auf dem Grundkörper angeordnetes Deckelement mit einer Oberseite und einer Unterseite aus einem Metallmaterial oder einem lebensmittelechten, vierten Kunststoffmaterial, insbesondere Polypropylen (PP), auf, wobei das Deckelement ein Befestigungssystem zum Festlegen eines Flächentemperierungssystems auf der Oberfläche des Deckelements aufweist. Ein derartiges Deckelement schließt den Hohlraum nach oben mit einem lebensmittelechten Material ab, sodass eine Beeinträchtigung der durch den Hohlraum strömenden Frischluft vermieden wird. Zugleich dient es zur Befestigung eines Flächentemperierungssystems.

In wenigstens einer Ausgestaltung weist das Befestigungssystem wenigstens ein Klettvlies, eine Mehrzahl von Klettbändern, eine Mehrzahl von Befestigungsnoppen oder eine Mehrzahl von Befestigungsclips zum Befestigen einer Mehrzahl von Rohrleitungen auf der Oberseite des Deckelements auf. Derartige Befestigungssysteme erlauben eine besonders einfache und schnelle Montage eines Fußbodenheiz- oder -kühlsystems.

In wenigstens einer Ausgestaltung weist die Unterseite des Deckelements eine erste Oberflächenstruktur auf, die dazu eingerichtet ist, einen durch den ersten Hohlraum strömenden Luftstrom zu verwirbeln. In einer weiteren Ausgestaltung der Erfindung weist eine den ersten Hohlraum nach unten begrenzende Bodenfläche des Grundkörpers eine zweite Oberflächenstruktur auf, die dazu eingerichtet ist, einen durch den Hohlraum strömenden Luftstrom zu verwirbeln. Das Verwirbeln eines durch den Hohlraum strömenden Luftstroms führt insbesondere zur Verbesserung einer Wärmeübertragung zwischen einem in dem Oberboden angeordneten Flächentemperierungssystem und der durch den ersten Hohlraum strömenden Frischluft.

In wenigstens einer Ausgestaltung ist in dem Grundkörper und/oder dem Leitelement wenigstens ein zweiter Hohlraum angeordnet und dazu ausgestaltet, sich beim Vergießen eines Flächentemperierungssystems in dem Oberboden zumindest teilweise mit einem Vergussmaterial zu füllen. Eine derartige Aktivierung des Bodenpanels führt zu einer weiteren Verbesserung der Wärmeübertragung von dem Flächentemperierungssystem und dem das Bodenpanel durchströmenden Luftstrom.

Weitere vorteilhafte Ausgestaltungen der Erfindung sind in der nachfolgenden ausführlichen Beschreibung von Ausführungsbeispielen sowie den angehängten Patentansprüchen offenbart.

Nachfolgend wird ein bevorzugtes Ausführungsbeispiel der Erfindung unter Bezugnahme auf die angehängten Figuren im Detail beschrieben. Darin zeigen:
- Figur 1: eine perspektivische Ansicht eines Bodenpanels gemäß einer ersten Ausgestaltung der Erfindung,
- Figur 2: eine Draufsicht einer luftführenden Wanne des Grundkörper des Bodenpanels gemäß Figur 1,
- Figur 3: eine Schnittdarstellung eines Fußbodens im Bereich des Bodenpanels gemäß Figur 1,
- Figur 4: einen Schnittdarstellung in einem Anschlussbereich eines Bodenpanels und
- Figur 5: eine perspektivische Ansicht eines Bodenpanels gemäß einer zweiten Ausgestaltung der Erfindung.

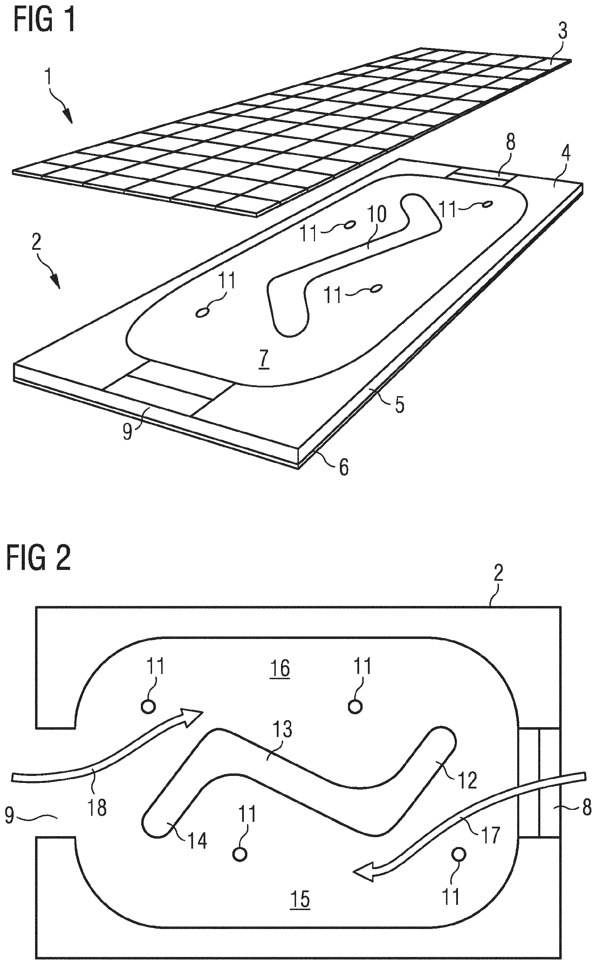

Figur 1 zeigt eine Explosionsdarstellung eines Bodenpanels 1 gemäß einer Ausgestaltung der Erfindung. Das Bodenpanel 1 besteht im Wesentlichen aus einem Grundkörper 2 sowie einem auf dem Grundkörper angeordneten Deckelement 3. In der Explosionsdarstellung ist das Deckelement 3 nicht auf dem Grundkörper 2 angeordnet, sodass weitere Details des Grundkörpers 2 ersichtlich sind.

Der Grundkörper 2 besteht im Wesentlichen aus einer Wanne 4, die von einer Füllung 5 umgeben ist. Beispielsweise kann die Wanne 4 mittels eines geeigneten Werkzeugs aus Polypropylen tiefgezogen und auf der Rückseite mit Polystyrol hinterschäumt werden. Alternativ ist es auch möglich, aus einem blockförmigen Rohkörper, beispielsweise einem Polyurethanblock, einen Hohlraum auszufräsen und nachfolgend eine dünne Folie auf das ausgefräste Profil zu kaschieren. Die aufkaschierte Folie bildet dann die Wanne 4 und sorgt für eine Trennung von einem in dem Hohlraum strömenden Luftstrom von dem Material der Füllung 5.

Rückseitig, das heißt in der Figur 1 unten, ist unter dem Grundkörper 2 eine Trittschalldämmung 6 in Form eines Polyethylenschaums aufkaschiert. Durch diese Schicht ergibt sich für die Trittschalleigenschaften des Grundkörpers 2 bevorzugt ein ähnlich guter Wert wie für angrenzende Standard-Flächenheizungselemente. Auf diese Weise kann eine durchgehende und gleichmäßige Trittschalldämmung für den gesamten Raum sichergestellt werden.

Die Wanne 4 begrenzt einen Hohlraum 7 im Inneren des Bodenpanels 1 nach unten und an den Seiten. Der Hohlraum 7 kann im fertiggestellten Zustand des Raumbodens von Frischluft eines Belüftungssystems durchströmt werden. Beispielsweise kann von außen über einen Abluftwärmetauscher angesaugte Frischluft über den Hohlraum 7 an ein in dem Raum befindliches Auslassgitter geleitet werden. Auf den Einsatz eines zusätzlichen Nachheizregisters kann dann in der Regel verzichtet werden, was zu einer Vereinfachung der Klimatisierung, einer Verbesserung des Raumklimas und einer Kostenreduktion beim Bau und im Betrieb führt.

Zur Luftführung ist an einer ersten Seite des Bodenpanels 1 ein Eingangsschacht 8 und an einer gegenüberliegenden zweiten Seite des Bodenpanels 1 ein Ausgangsschacht 9 angeordnet. Der Eingangsschacht 8 beziehungsweise der Ausgangsschacht 9 dienen zum Zu- beziehungsweise Abführen von durch den Hohlraum 7 strömender Frischluft. Während die Frischluft durch den Hohlraum 7 strömt, wird diese durch ein darüberliegendes Flächenheiz- beziehungsweise -kühlsystem erwärmt beziehungsweise abgekühlt.

Im dargestellten Ausführungsbeispiel wird das Flächentemperierungssystem, beispielsweise eine Fußbodenheizung, auf dem Deckelement 3 des Bodenpanels 1 montiert. Die hierzu verwendeten Heizelemente, insbesondere Rohrleitungen eines von einem temperierten Wärmeträgermediums durchflossenen Rohrregisters, sind in der Figur 1 nicht dargestellt.

Bevorzugt weist das Deckelement 3 bereits geeignete Befestigungselemente zur Festlegung von Rohrleitungen an seiner Oberseite auf. Beispielsweise kann auf der Oberseite des Deckelements 3 ein Klettvlies aufkaschiert sein, an dem mit einem Klettband umgebene Rohrleitungen besonders leicht befestigt werden können. Alternative Befestigungsmittel, wie insbesondere Klettbänder, Noppen oder Befestigungsclips, sind ebenfalls möglich. Die direkte Befestigung eines Flächenheizsystems an dem Deckelement 3 ermöglicht zudem eine besonders gute Wärmeübertragung von dem Flächenheizsystem auf den darunterliegenden Hohlraum 7.

Um das großflächige Deckelement 3 im Bereich des Hohlraums 7 abzustützen, ist in dessen Mitte ein im Wesentlichen S-förmiges Leitelement 10 angeordnet. Zur weiteren Verstärkung des Bodenpanels 1 sind in der Ausgestaltung gemäß Figur 1 insgesamt vier Verstärkungselemente 11 angeordnet, die das Deckelement 3 an einer Unterseite des Grundkörpers 2 abstützen. Je nach geforderter Flächenlast können auch mehr als vier Verstärkungselemente 11 vorgesehen werden. Bevorzugt sind das Leitelement 10 und die Verstärkungselemente 11 aus demselben Material wie die Wanne 4 gefertigt und einstückig mit der Wanne 4 verbunden. Beispielsweise können sie bereits beim Tiefziehen der Wanne 4 aus dem Grundmaterial herausgearbeitet werden.

Neben der mechanischen Abstützung des Deckelements 3 dient das Leitelement 10 zudem zu einer Aufteilung eines über den Eingangsschacht 8 einströmenden Luftstroms in zwei Teilströme. Dies führt zu einer Verwirbelung des Luftstroms und somit zu einer längeren Verweildauer der Luft in dem Hohlraum 7. Hierdurch wird eine Wärmeübertragung von einem Flächentemperierungssystem auf die verwirbelte Luft verbessert.

Figur 2 zeigt eine Draufsicht auf die luftführende Wanne 4 des Grundkörpers 2 gemäß Figur 1. In der Draufsicht gemäß Figur 2 lässt sich die S-förmige Gestalt des Leitelements 10 besonders gut erkennen. Insbesondere kann man erkennen, dass das Leitelement 10 aus einem winklig angeordneten ersten Ableitelement 12 im Bereich des Eingangsschachts 8, einem Verbindungsstück 13 sowie einem zweiten Ableitelement 14 im Bereich des Ausgangsschachts 9 besteht. Das erste Ableitelement 12 ist parallel zu dem zweiten Ableitelement 14 angeordnet. Im Ausführungsbeispiel beträgt der Winkel zwischen der Außenkante des Ableitelements 12 und einer geraden Verbindungslinie zwischen dem Eingangsschacht 8 und dem Ausgangsschacht 9 in etwa 50°. Der genaue Winkel ist abhängig von den Abmessungen des Bodenpanels 1 und einer Geschwindigkeit des Luftstroms und liegt bevorzugt zwischen 20° und 70°.

Durch die gegenüberliegende Anordnung des Eingangsschachts 8 und des Ausgangsschachts 9 wird ein in den jeweiligen Schacht 8 oder 9 eingeführter Reinigungsschlauch 17 beziehungsweise 18 jeweils in Einschubrichtung nach links, und damit in der Schnittansicht der Figur 2 nach unten beziehungsweise nach oben abgelenkt. Auf diese Weise können zwei durch das Leitelement 10 voneinander getrennte Teilbereiche 15 und 16 des Hohlraums 7 jeweils getrennt voneinander gereinigt werden. Das Leitelement 10 verhindert dabei, dass ein in den Eingangsschacht 8 oder den Ausgangsschacht 9 eingeführter Reinigungsschlauch nur auf geradem Wege durch den Hohlraum 7 hindurchläuft, ohne die links und rechts der Mitte liegenden Bereiche 15 und 16 des Hohlraums 7 zu reinigen. Durch die Ablenkung des ersten Reinigungsschlauchs 17, der beispielsweise in eine Revisionsklappe einer Luftzuführung eingeführt wird, beziehungsweise des zweiten Reinigungsschlauchs 18, der beispielsweise in einen Luftauslass in dem Fußboden oder einer Wand des belüfteten Raums eingeführt wird, wird somit eine besonders gründliche Reinigung des gesamten ersten beziehungsweise zweiten Teilbereichs 15 beziehungsweise 16 ermöglicht. Anders als in den bekannten Flächenelementen befinden sich in den Teilbereichen 15 und 16 keine regelmäßig angeordneten Distanzelemente, die eine Reinigung erschweren.

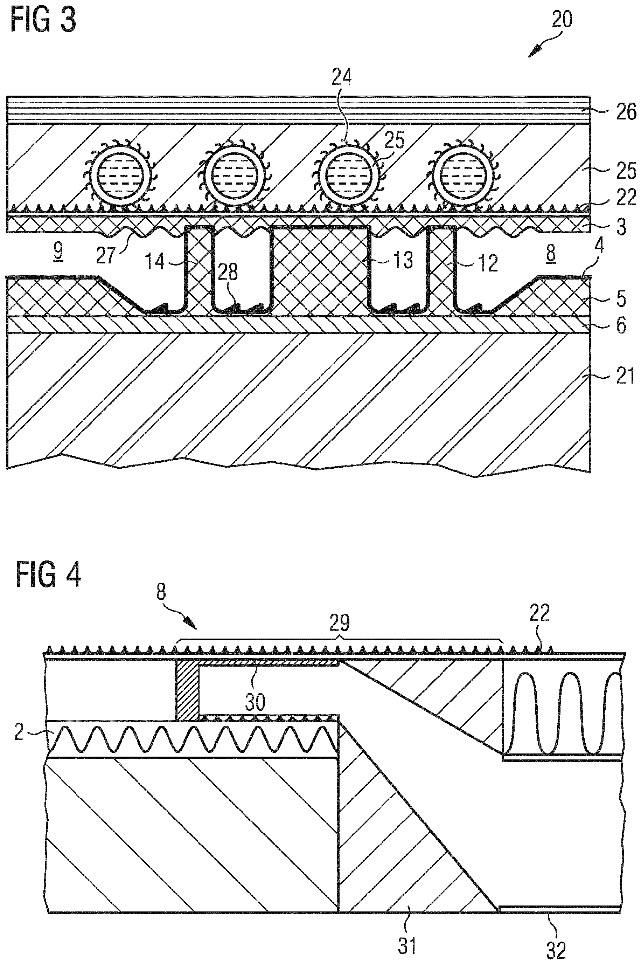

Figur 3 zeigt eine Schnittdarstellung durch einen fertiggestellten Fußboden 20 mit einem darin integrierten Bodenpanel 1 entlang einer Verbindungslinie zwischen dem Eingangsschacht 8 und dem Luftausgangsschacht 9. Der Fußboden 20 umfasst einen Unterboden 21, beispielsweise eine Betondecke mit einer darauf aufgetragenen Ausgleichsschicht. Auf der Oberseite des Unterbodens 21 ist das Bodenpanel 1 gemäß Figur 1 angeordnet. Es umfasst, von unten nach oben, die Trittschalldämmung 6, den Grundkörper 2, bestehend aus Füllung 5 und Wanne 4, sowie das darauf angeordnete Deckelement 3. Auf dem Deckelement 3 ist ein Klettvlies 22 aufkaschiert. An dem Klettvlies 22 ist eine Mehrzahl von Rohrleitungen 23 einer Fußbodenheizung mittels Klettbändern 24 befestigt. Die Rohrleitungen 23 sind in einer Estrichschicht 25 vergossen. Oberhalb der Estrichschicht 25 ist der eigentliche Bodenbelag 26, beispielsweise ein Parkett oder Fliesenboden des Raumes angeordnet. Zusammen bilden die Estrichschicht 25, die darin vergossene Rohranordnung und der Bodenbelag 26 einen Oberboden des Fußbodens 20.

Wie in der Figur 3 zu erkennen ist, weist das Deckelement 3 auf seiner Unterseite eine erste Oberflächenstruktur 27 auf, die im Ausführungsbeispiel sowohl zu einer horizontalen Verstärkung des Deckelements 3 als auch zu einer vertikalen Verwirbelung eines durch den Hohlraum 7 strömenden Luftstroms dient. Zusätzlich weist eine Bodenfläche der Wanne 4 zumindest in Teilbereichen eine zweite Oberflächenstruktur 28 auf, die ebenfalls zur Verwirbelung eines Luftstroms dient. Bei den Oberflächenstrukturen 27 und 28 kann es sich beispielsweise um verhältnismäßig kleine wellenbeziehungsweise rampenartige Elemente handeln, die eine Verwirbelung des Luftstroms begünstigen. Diese sind bevorzugt verhältnismäßig klein, beispielsweise mit einer Höhe von maximal 0,5 oder 1,0 mm, ausgeführt, sodass der Hohlraum 7 nicht wesentlich verengt wird. Beispielsweise weist der Hohlraum 7 bei einer Gesamthöhe des Bodenpanels von etwa 30 mm eine lichte Höhe von etwa 20 mm auf. Die Vorsehung von Mitteln zur Verwirbelung der Luft sorgt für einen besseren Wärmeübergang von den Rohrleitungen 23 auf die durch den Hohlraum 7 strömende Frischluft.

Zur weiteren Verbesserung der Wärmeübertragung können in dem Deckelement 3 in einem Randbereich des Grundkörpers 2 oder in einem Bereich des Leitelements 10 oder der Verstärkungselemente 11 ein oder mehrere Öffnungen vorgesehen sein, die ein Eindringen des Füllmaterials der Estrichschicht 25 in korrespondierende Hohlräume des Grundkörpers 2 ermöglicht. Auf diese Weise kann der Grundkörper 2 thermoaktiviert werden, was zu einer weiteren Verbesserung der Wärmeübertragung führt. Zudem kann eine mechanische Kraftübertragung von dem Deckelement 3 auf den Grundkörper 2 verbessert werden.

In einer Ausgestaltung ist der Eingangsschacht 8 des Grundkörpers 2 so ausgestaltet, dass eine Anbindung des Bodenpanels 1 aus einer tieferen, unterhalb der Trittschallebene liegenden Schicht erfolgen kann. Dazu sind die ersten 50 bis 70 mm des Grundkörpers 2 im Eingangsbereich nach unten offen, wie in der Figur 4 dargestellt. In der Figur 4 lässt sich erkennen, dass in einem Übergangsbereich 29 des Bodenpanels 1 ein in den Grundkörper 2 eingebautes Ovalrohr 30 und ein Anschlusselement 31 angeordnet sind. Das Ovalrohr 30 dient zur Stabilisierung des Bodenpanels 1 in dem Übergangsbereich 29. Das Anschlusselement 31 ermöglicht eine Anbindung an ein in einer Schicht des Unterbodens 21 verlegtes Rohr 32. Im Ausführungsbeispiel ist das Rohr 32 unter einem benachbarten Bodenpanel, beispielsweise einer konventionellen Trägerplatte eines Fußbodenheizungssystems angeordnet. Im Ausführungsbeispiel wird das Anschlusselement 31 und ein Übergang zu dem benachbarten Bodenpanel durch einen Überstand des Klettvlies' 22 abgedeckt. Das Rohr 32 weist eine Querschnittsfläche von 150 x 50 mm auf, die in dem 50 mm langen Anschlusselement 31 auf einen Öffnung von 250 x 20 mm des Ovalrohrs 30 aufgeweitet wird.

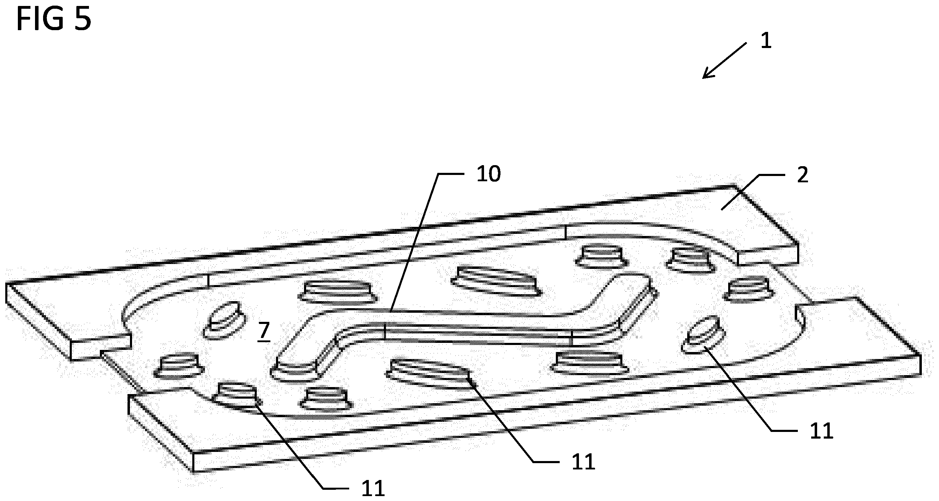

Figur 5 zeigt eine weitere Ausgestaltung eines erfindungsgemäßen Bodenpanels 1. Abweichend von dem Bodenpanel 1 gemäß den Figuren 1 bis 3, ist sein Grundkörper 2 einstückig aus expandiertem Polypropylen (EPP) hergestellt. Direkt bei der Herstellung des Grundkörpers 2 werden neben einem S-förmigen Leitelement 10 insgesamt zwölf Verstärkungselemente 11 geformt, die neben ihrer statischen Aufgabe noch eine Luftleitfunktion übernehmen. Die in der Figur 5 nicht dargestellte Deckschicht ist in diesem Ausführungsbeispiel aus einem Metallmaterial gefertigt. Unter dem Grundkörper ist eine in der Figur 5 ebenfalls nicht ersichtliche Trittschalldämmung aus Polyethylen-Schaum vorgesehen wie zuvor. Auf die Vorsehung zusätzlicher Strukturen zur Verwirbelung der den Hohlraum 7 durchströmenden Luft wurde in diesem Ausführungsbeispiel verzichtet. Die Formgebung des Grundkörpers 2 mit dem S-förmigen Leitelement 10 und den Verstärkungselementen 11 genügt, um eine turbulente Strömung zu erzeugen. In dieser Ausgestaltung ist keine Thermoaktivierung des Grundkörpers vorhanden. Bezüglich der weiteren Details des Bodenpanels 1 gemäß Figur 5 wird auf die Beschreibung der Figuren 1 bis 4 verwiesen.

Die anhand der Figuren 1 bis 5 beschriebenen Ausgestaltungen des Bodenpanels 1 weisen eine Reihe von Vorzügen gegenüber bekannten Konzepten zur Luftführung auf. Neben der bereits beschriebenen, besonders einfachen Reinigung des Hohlraums 7 kann das Bodenpanel 1 besonders flach und bereits mit einer montierten Trittschalldämmung 6 geliefert werden. Zudem befinden sich der Eingangsschacht 8 und der Ausgangsschacht 9 vollständig in der Ebene des Bodenpanels, sodass es zu keiner Unterbrechung einer Trittschalldämmung im Bereich des Bodenpanels 1 kommt. Ein derartiges Bodenpanel 1 kann damit in Verbindung mit anderen Bodenpanelen zum Verlegen eines Flächentemperierungssystems verwendet werden. Dabei bleibt sowohl die Dicke der Bodenpanele als auch eine durchgehende Trittschallisolierung gleich.

Zudem kann, wie oben beschrieben, auf die gesonderte Vorsehung eines Nachheizregisters zum Nachheizen von über einen Abluftwärmetauscher von außen herangeführter Frischluft verzichtet werden. Verglichen mit einem konventionellen Luftkanal mit einem zusätzlichen Nachheizregister wird dabei ein Druckverlust reduziert und damit Hilfsenergie eingespart.

Das beschriebene Bodenpanel kann besonders einfach, unter Verwendung von Standardsteckverbindern, wie beispielsweise dem sogenannten "Plug and Play"-System des Herstellers Pluggit GmbH angeschlossen werden. Durch Wahl geeigneter Deckelemente 3 können unterschiedliche Trägersysteme, beispielsweise Klett- oder Clipsysteme, verwendet werden. Zudem ermöglicht der Aufbau ausschließlich aus Kunststoffteilen eine geringere Schallübertragung als bei bekannten Blechelementen. Insbesondere können der Grundkörper 2 beziehungsweise die Wanne 4 und das Deckelement 3 aus einem lebensmittelechten Material, wie beispielsweise Polypropylen, gefertigt werden. Die Verwendung von Kunststoffen wirkt auch wirksam einer Bildung von Korrosionsschäden, beispielsweise beim Kondensieren von Feuchtigkeit der zugeführten Frischluft, entgegen. Insbesondere für das Deckelement 3 eignen sich jedoch auch andere Materialen, wie insbesondere Metall, die vorteilhafte mechanische Eigenschaften aufweisen.

### Bezugszeichenliste

- 1: Bodenpanel
- 2: Grundkörper
- 3: Deckelement
- 4: Wanne
- 5: Füllung
- 6: Trittschalldämmung
- 7: Hohlraum
- 8: Eingangsschacht
- 9: Ausgangsschacht
- 10: Leitelement
- 11: Verstärkungselement
- 12: erstes Ableitelement
- 13: Verbindungselement
- 14: zweites Ableitelement
- 15: erster Teilbereich
- 16: zweiter Teilbereich
- 17: erster Reinigungsschlauch
- 18: zweiter Reinigungsschlauch
- 20: Fußboden
- 21: Unterboden
- 22: Klettvlies
- 23: Rohrleitung
- 24: Klettband
- 25: Estrichschicht
- 26: Bodenbelag
- 27: erste Oberflächenstruktur
- 28: zweite Oberflächenstruktur
- 29: Übergangsbereich
- 30: Ovalrohr
- 31: Anschlusselement
- 32: Rohr

## Patentansprüche

1. Bodenpanel (1), insbesondere zum Aufbau eines temperierbaren Hohlraumbodens, aufweisend:
- einen Grundkörper (2) zum Übertragen einer Last von einem über dem Bodenpanel (1) angeordneten Oberboden auf einen unter dem Bodenpanel (1) angeordneten Unterboden (21);
- einen in dem Bodenpanel (1) angeordneten ersten Hohlraum (7) ;
- einen Eingangsschacht (8), über den ein Luftstrom in den ersten Hohlraum (7) einleitbar ist;
- einen Ausgangsschacht (9), über den der Luftstrom aus dem ersten Hohlraum (7) ausleitbar ist, wobei der Eingangsschacht (8) und der Ausgangsschacht (9) auf einander gegenüberliegenden Seiten des Bodenpanels (1) angeordnet sind; und
- ein in dem ersten Hohlraum (7) angeordnetes Leitelement (10), das den Hohlraum (7) in einen ersten Teilbereich (15) und einen zweiten Teilbereich (16) teilt,
**dadurch gekennzeichnet, dass** das Leitelement (10) ein, bezogen auf eine gerade Verbindungslinie zwischen dem Eingangsschacht (8) und dem Ausgangsschacht (9), krummwinklig angeordnetes erstes Ableitelement (12) im Bereich des Eingangsschachts (8) und ein zu dem ersten Ableitelement (12) im Wesentlichen paralleles, im Bereich des Ausgangsschachts (9) angeordnetes zweites Ableitelement (14) aufweist, sodass ein in den Eingangsschacht (8) eingeführter Reinigungsschlauch (17) in den ersten Teilbereich (15) des Hohlraums (7) abgelenkt wird und ein in den Ausgangsschacht (9) eingeführter Reinigungsschlauch (18) in den zweiten Teilbereich (16) des Hohlraums (7) abgelenkt wird.

2. Bodenpanel (1) nach Anspruch 1,
wobei der Winkel zwischen einer dem Eingangsschacht (8) zugewandten Außenkante des ersten Ableitelements (12) und der geraden Verbindungslinie zwischen dem Eingangsschacht (8) und dem Ausgangsschacht (9) zwischen 20° und 70° beträgt.

3. Bodenpanel (1) nach Anspruch 1 oder 2,
wobei das Leitelement (10) im Querschnitt im Wesentlichen S-förmig ausgestaltet ist.

4. Bodenpanel (1) nach einem der Ansprüche 1 bis 3, wobei in dem Hohlraum (7) des Weiteren eine Mehrzahl von Verstärkungselementen (11) zur weiteren Verstärkung des Bodenpanels (1) angeordnet ist.

5. Bodenpanel (1) nach Anspruch 4, wobei die Verstärkungselemente (11) eine Luftleitfunktion aufweisen.

6. Bodenpanel (1) nach einem der Ansprüche 1 bis 5,
wobei der Grundkörper (2) als einstückiges Kunststoffteil, insbesondere aus expandiertem Polypropylen, ausgestaltet ist.

7. Bodenpanel (1) nach einem der Ansprüche 1 bis 5,
wobei der Grundkörper (2) eine den ersten Hohlraum zumindest teilweise begrenzende Wanne (4) aus einem lebensmittelechten, ersten Kunststoffmaterial, insbesondere aus Polypropylen, und eine die Wanne (4) zumindest teilweise umgebende Füllung (5) aus einem zweiten Kunststoffmaterial, insbesondere Polystyrol oder Polyurethan, aufweist.

8. Bodenpanel (1) nach einem der Ansprüche 1 bis 7,
weiter aufweisend eine unter dem Grundkörper (2) angeordnete Trittschalldämmung (6) aus einem Kunststoffmaterial, insbesondere Polyethylen.

9. Bodenpanel (1) nach einem der Ansprüche 1 bis 8,
weiter aufweisend ein auf dem Grundkörper (2) angeordnetes Deckelement (3) mit einer Oberseite und einer Unterseite aus einem Metallmaterial oder einem lebensmittelechten Kunststoffmaterial, insbesondere Polypropylen, wobei das Deckelement (3) ein Befestigungssystem zum Festlegen eines Flächentemperierungssystems auf der Oberfläche des Deckelements (3) aufweist.

10. Bodenpanel (1) nach Anspruch 9,
wobei das Befestigungssystem wenigstens ein Klettvlies (22), eine Mehrzahl von Klettbändern (24), eine Mehrzahl von Befestigungsnoppen oder eine Mehrzahl von Befestigungsclips zum Befestigen einer Mehrzahl von Rohrleitungen (23) auf der Oberseite des Deckelements (3) aufweist.

11. Bodenpanel (1) nach Anspruch 9 oder 10,
wobei die Unterseite des Deckelements (3) eine Oberflächenstruktur (27) aufweist, die dazu eingerichtet ist, einen durch den ersten Hohlraum (7) strömenden Luftstrom zu verwirbeln.

12. Bodenpanel (1) nach einem der Ansprüche 1 bis 11,
wobei eine den ersten Hohlraum (7) nach unten begrenzende Bodenfläche des Grundkörpers (2) eine Oberflächenstruktur (28) aufweist, die dazu eingerichtet ist, einen durch den Hohlraum (7) strömenden Luftstrom zu verwirbeln.

13. Bodenpanel (1) nach einem der Ansprüche 1 bis 12,
wobei in dem Grundkörper (2) und/oder dem Leitelement (10) wenigstens ein zweiter Hohlraum angeordnet und dazu ausgestaltet ist, sich beim Vergießen eines Flächentemperierungssystems in dem Oberboden zumindest teilweise mit einem Vergussmaterial zu füllen.

14. Bodenpanel (1) nach einem der Ansprüche 1 bis 13,
wobei der Eingangsschacht (8) einen nach unten offenen Bereich zum Zuführen des Luftstroms aus einer unter dem Bodenpanel (1) liegenden Schicht des Unterbodens (21) aufweist.

## Claims

1. Floor panel (1), in particular for constructing a temperature-controlled cavity floor, comprising:
- a main body (2) for transmitting a load from an upper floor arranged over the floor panel (1) onto a sub-floor (21) arranged under the floor panel (1);
- a first cavity (7) arranged in the floor panel (1);
- an inlet shaft (8), via which an air flow is introducible into the first cavity (7);
- an outlet shaft (9), via which the air flow is extractable out of the first cavity (7), wherein the inlet shaft (8) and the outlet shaft (9) are arranged on sides of the floor panel (1) opposite each other; and
- a guide element (10) arranged in the first cavity (7), which splits the cavity (7) into a first partial region (15) and a second partial region (16),
**characterized in that** the guide element (10) comprises a first diverting element (12), arranged crooked-angled with respect to a straight connecting line between the inlet shaft (8) and the outlet shaft (9), in the region of the inlet shaft (8) and a second diverting element (14), substantially parallel to the first diverting element (12), arranged in the region of the outlet shaft (9), so that a cleaning hose (17), inserted into the inlet shaft (8), is diverted into the first partial region (15) of the cavity (7), and a cleaning hose (18), inserted into the outlet shaft (9), is diverted into the second partial region (16) of the cavity (7).

2. Floor panel (1) according to claim 1,
wherein the angle between an outer edge of the first diverting element (12) facing the inlet shaft (8) and the straight connecting line between the inlet shaft (8) and the outlet shaft (9) is between 20° and 70°.

3. Floor panel (1) according to claim 1 or 2,
wherein the guide element (10), in cross-section, is configured substantially S-shaped.

4. Floor panel (1) according to one of claims 1 to 3,
wherein, in the cavity (7), moreover a plurality of reinforcing elements (11) are arranged for the further reinforcing of the floor panel (1).

5. Floor panel (1) according to claim 4, wherein the reinforcing elements (11) have an air-guiding function.

6. Floor panel (1) according to one of claims 1 to 5,
wherein the main body (2) is configured as a one-piece synthetic material part, in particular of expanded polypropylene.

7. Floor panel (1) according to one of claims 1 to 5,
wherein the main body (2) comprises a tub (4) at least partially bordering the first cavity, of a food-grade first synthetic material, in particular of polypropylene, and a filling (5) at least partially surrounding the tub (4) of a second synthetic material, in particular polystyrene or polyurethane.

8. Floor panel (1) according to one of claims 1 to 7, further comprising a footfall-sound insulation (4), arranged below the main body (2), of a synthetic material, in particular polyethylene.

9. Floor panel (1) according to one of claims 1 to 8, further comprising a cover element (3), arranged on the main body (2), with an upper side and a lower side out of a metal material or a food-grade synthetic material, in particular polypropylene, wherein the cover element (3) comprises a fastening system for securing a surface temperature-control system on the surface of the cover element (3).

10. Floor panel (1) according to claim 9,
wherein the fastening system comprises at least one Velcro non-woven fabric (22), a plurality of Velcro strips (24), a plurality of fastening knobs or a plurality of fastening clips for fastening a plurality of pipelines (23) onto the upper side of the cover element (3).

11. Floor panel (1) according to claim 9 or 10,
wherein the underside of the cover element (3) comprises a surface structure (27), which is configured to swirl an air flow streaming through the first cavity (7).

12. Floor panel (1) according to one of claims 1 to 11,
wherein a floor surface of the main body (2) downwardly delimiting the first cavity (7) has a surface structure (28), which is configured to swirl an air flow flowing through the cavity (7).

13. Floor panel (1) according to one of claims 1 to 12,
wherein, in the base body (2) and/or the guide element (10), at least one second cavity is arranged and configured to be filled at least partially with a potting material, when potting a surface temperature-control system in the upper floor.

14. Floor panel (1) according to one of claims 1 to 13,
wherein the inlet shaft (8) comprises a downwardly-open region for supplying the air flow from a layer of the sub-floor (21) lying below the floor panel (1).

## Revendications

1. Panneau de plancher (1), en particulier servant à construire un plancher à cavités thermorégulable, présentant :
- un corps de base (2) servant à transmettre une charge depuis un plancher supérieur disposé au-dessus du panneau de sol (1) sur un plancher inférieur (21) disposé sous le panneau de sol (1) ;
- une première cavité (7) disposée dans le panneau de sol (1) ;
- un puits d'entrée (8), par l'intermédiaire duquel un flux d'air peut être introduit dans la première cavité (7) ;
- un puits de sortie (9), par l'intermédiaire duquel le flux d'air peut être évacué hors de la première cavité (7), dans lequel le puits d'entrée (8) et le puits de sortie (9) sont disposés sur des côtés se faisant face les uns les autres du panneau de plancher (1) ; et
- un élément de guidage (10) disposé dans la première cavité (7), qui divise la cavité (7) en une première zone partielle (15) et en une seconde zone partielle (16),
**caractérisé en ce que** l'élément de guidage (10) présente un premier élément de déviation (12) disposé selon un angle d'incurvation par rapport à une ligne de liaison rectiligne entre le puits d'entrée (8) et le puits de sortie (9) dans la zone du puits d'entrée (8) et un second élément de déviation (14) sensiblement parallèle par rapport au premier élément de déviation (12), et disposé dans la zone du puits de sortie (9), de sorte qu'un tuyau flexible de nettoyage (17) introduit dans le puits d'entrée (8) est dévié dans la première zone partielle (15) de la cavité (7) et un tuyau flexible de nettoyage (18) introduit dans le puits de sortie (9) est dévié dans la seconde zone partielle (16) de la cavité (7).

2. Panneau de plancher (1) selon la revendication 1,
dans lequel l'angle entre une arête extérieure du premier élément de déviation (12), tournée vers le puits d'entrée (8) et la ligne de liaison rectiligne entre le puits d'entrée (8) et le puits de sortie (9) est compris entre 20° et 70°.

3. Panneau de plancher (1) selon la revendication 1 ou 2,
dans lequel l'élément de guidage (10) est configuré dans la section transversale de manière à présenter sensiblement une forme de S.

4. Panneau de plancher (1) selon l'une quelconque des revendications 1 à 3, dans lequel une multitude d'éléments de renforcement (11) servant au renforcement supplémentaire du panneau de sol (1) est en outre disposée dans la cavité (7).

5. Panneau de sol (1) selon la revendication 4, dans lequel les éléments de renforcement (11) présentent une fonction de guidage d'air.

6. Panneau de sol (1) selon l'une quelconque des revendications 1 à 5,
dans lequel le corps de base (2) est configuré sous la forme d'une partie en matière plastique d'un seul tenant en particulier en polypropylène expansé.

7. Panneau de sol (1) selon l'une quelconque des revendications 1 à 5,
dans lequel le corps de base (2) présente une cuve (4) délimitant au moins en partie la première cavité, composée d'un premier matériau en matière plastique adapté au contact avec les aliments, en particulier du polypropylène, et un remplissage (5) entourant au moins partiellement la cuve (4), composé d'un deuxième matériau en matière plastique, en particulier du polystyrène ou du polyuréthane.

8. Panneau de plancher (1) selon l'une quelconque des revendications 1 à 7,
présentant en outre une isolation phonique (6) disposée sous le corps de base (2), composée d'un matériau en matière plastique, en particulier du polyéthylène.

9. Panneau de plancher (1) selon l'une quelconque des revendications 1 à 8, présentant par ailleurs un élément de recouvrement (3) disposé sur le corps de base (2) avec un côté supérieur et un côté inférieur composé d'un matériau métallique ou d'un matériau en matière plastique adapté au contact alimentaire, en particulier du polypropylène, dans lequel l'élément de recouvrement (3) présente un système de fixation servant à fixer un système de thermorégulation de surface sur la face supérieure de l'élément de recouvrement (3).

10. Panneau de plancher (1) selon la revendication 9,
dans lequel le système de fixation présente au moins un non-tissé velcro (22), une pluralité de bandes velcro (24), une pluralité de noppes de fixation ou une pluralité de clips de fixation servant à fixer une pluralité de conduits (23) sur le côté supérieur de l'élément de recouvrement (3).

11. Panneau de plancher (1) selon la revendication 9 ou 10,
dans lequel le côté inférieur de l'élément de recouvrement (3) présente une structure de surface (27), qui est configurée pour faire tourbillonner un flux d'air circulant à travers la première cavité (7).

12. Panneau de plancher (1) selon l'une quelconque des revendications 1 à 11,
dans lequel une face de plancher, délimitant vers le bas la première cavité (7), du corps de base (2) présente une structure de surface (28), qui est configurée pour faire tourbillonner un flux d'air circulant à travers la cavité (7).

13. Panneau de plancher (1) selon l'une quelconque des revendications 1 à 12,
dans lequel au moins une deuxième cavité est disposée dans le corps de base (2) et/ou dans l'élément de guidage (10) et est configurée pour se remplir lors du scellement d'un système de thermorégulation de surface dans le plancher supérieur au moins en partie d'un matériau de scellement.

14. Panneau de plancher (1) selon l'une quelconque des revendications 1 à 13, dans lequel le puits d'entrée (8) présente une zone ouverte vers le bas servant à amener le flux d'air depuis une couche située sous le panneau de sol du sous-plancher (21).
